# EUROPEAN PATENT SPECIFICATION

(11) **EP 1 332 915 B1**
(45) Date of publication and mention of the grant of the patent: **28.12.2011**
(21) Application number: 03100015.1
(22) Date of filing: 07.01.2003
(51) Int. Cl.: B60Q 1/04

(54) **A pedestrian protection headlamp assembly**
Scheinwerferanordnung mit Fussgängerschutzeinrichtung
Projecteur avec dispositif de protection des piétons

(30) Priority: 30.01.2002 US 683654
(43) Date of publication of application: 06.08.2003
(73) Proprietor: Volvo Car Corporation, 405 31 Göteborg (SE)
(72) Inventor: Ericsson, Mattias, 432 54 Goteborg (SE); Fritzon, Jan-Erik, 414 55 Gothenburg (SE); Bringfeldt, Gunnar, 444 91 Stenungsund (SE)
(74) Representative: Messulam, Alec Moses

(56) References cited:
- EP-A1- 0 422 405
- EP-A1- 1 048 521
- EP-A2- 0 894 663
- WO-A-00/49333
- DE-A1- 3 802 104
- DE-A1- 19 955 648
- US-A- 4 070 051
- US-A- 4 466 646
- US-A- 5 288 117

## Description

This invention relates to headlamps for automotive vehicles and, more particularly, to a headlamp that absorbs impact forces in order to lessen the severity of injury to a pedestrian struck by the vehicle.

In recent years, increased importance has been placed on ways in which automotive vehicles can be designed to minimize the amount of injury suffered by a pedestrian when struck by a vehicle. To achieve the greatest overall reduction in the probability and severity of pedestrian injury, all components of the vehicle that may contact a pedestrian during an impact must be designed to be "pedestrian friendly."

For styling, manufacturing and light projection reasons, some motor vehicles have headlamps that form the front corners of the vehicle and wrap around the corners of the vehicle. This allows a single headlamp unit to include the main headlamp reflectors, turn signals, and other lamps. The headlamps may also be located relatively far forward, with their front surface located only a short distance behind the bumper of the vehicle. When headlamps are in this position on the vehicle, it is important that they be designed with the pedestrian in mind.

U.S. Patent No. 4,475,148 teaches a headlamp that pivots about a horizontal axis when it is struck in order to cushion a pedestrian impact. This configuration, however, results in only the upper portion of the headlamp being able to move rearward, with any impact near the bottom of the headlamp being substantially un-cushioned. Also, because the headlamp has a short vertical dimension, the distance that the upper edge of the headlamp is able to move is relatively small, limiting the amount of energy that can be dissipated.

DE 3802104 discloses a headlamp unit mounted to a vehicle by interengaging inboard and outbard, upper and lower latches that release under impact to permit the headlamp unit to pivot about any of the latches against the force of restoring springs.

According to the present invention there is provided a pedestrian protection headlamp assembly for a motor vehicle comprising a headlamp having an inboard end and an outboard end mountable to the vehicle to form a part of a front corner of the vehicle, characterised in that the outboard end of the headlamp is connected by a fixed pivot mechanism to the vehicle, the pivot mechanism permitting the headlamp to rotate relative to the vehicle about a pivot axis that is inclined rearward from the vertical such that only the inboard end of the headlamp can move rearwardly relative to the vehicle, and in that the inboard end of the headlamp is connected to the vehicle by a damper disposed inboard of the pivot mechanism, the damper allowing controlled rearward movement of the inboard end of the headlamp relative to the vehicle when a force applied to the headlamp causes rotation of the headlamp about the pivot mechanism.

The pivot axis may be inclined rearward from vertical by an angle of between 10 degrees and 30 degrees.

The pivot mechanism may be adapted to secure the headlamp to a grill opening reinforcement.

The damper may be located adjacent an inboard end of the headlamp.

The headlamp assembly may further comprise a trigger preventing rotation of the headlamp about the pivot axis when the force applied to the headlamp is below a threshold value and permitting the headlamp to rotate rearward when the force applied reaches or exceeds the threshold value.

Preferably, the trigger may be disposed adjacent the inboard end of the headlamp and connects the headlamp to the vehicle.

The trigger may be manually releasable and after the trigger is released the pivot mechanism is operable to allow the headlamp to rotate forward with respect to the vehicle in order to provide access to a rear surface of the headlamp.

The trigger may include a shear pin designed to fail when a pre-determined force is applied thereto.

The headlamp may be adapted to absorb energy by deforming during an impact.

According to a second aspect of the invention there is provided a motor vehicle having a pedestrian protection headlamp assembly in accordance with said first aspect of the invention.

The invention will now be described by way of example with reference to the accompanying drawing of which:-
FIG.1 is a perspective partial view of a headlamp assembly according to the invention on a vehicle;
FIG.2 is a top view of the headlamp assembly in a normal operating condition;
FIG.3 is a top view of the headlamp assembly in a compressed condition; and
FIG.4 is a top view of the headlamp assembly in a servicing condition.

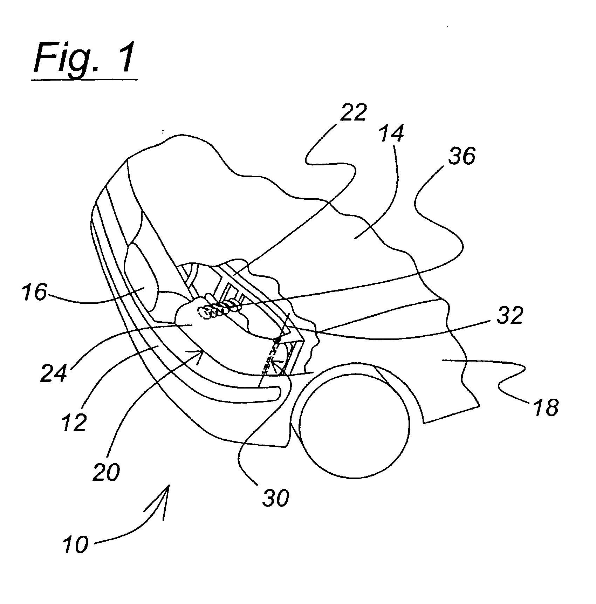

As seen in FIG. 1, a front quarter of an automotive vehicle 10 includes a bumper 12, a hood or bonnet 14, a grill 16, a fender or front wing 18, and a pedestrian protection headlamp assembly 20. A grill opening reinforcement 22 is located behind grill 16 and provides structural support for the grill and other components.

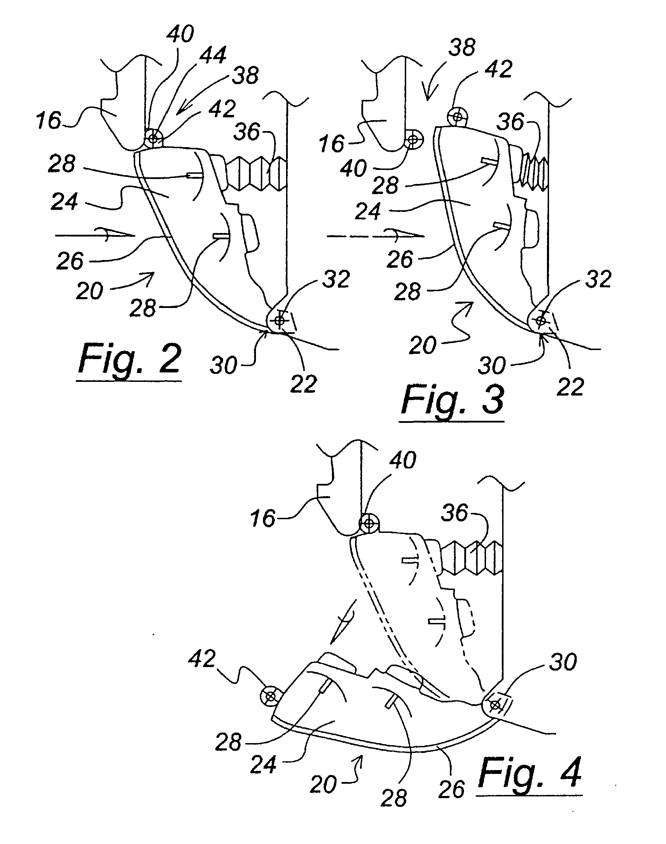

The headlamp assembly 20 is located at the outboard corner of the vehicle front quarter and wraps around the corner. As best seen in FIG. 2, headlamp assembly 20 preferably includes a headlamp 24 having a transparent lens 26 enclosing at least one bulb/reflector 28 for projecting a light beam. Many bulbs and/or reflectors may be contained within the headlamp 26 as called for by styling or functional considerations.

Headlamp assembly 20 further comprises a pivot mechanism 30 disposed adjacent the outboard end of headlamp 24 and defining a generally vertical or upwardly extending pivot axis 32 about which the headlamp 24 may pivot with respect to the vehicle.

As used herein, the terms "outboard" and "inboard" are with respect to the vehicle as a whole and refer to relative distance from a longitudinal centreline of the vehicle and the term generally vertical means inclined at no more than 45° to the vertical.

The pivot mechanism 30 preferably mounts the headlamp 24 to grille opening reinforcement 22, but may mount to any vehicle structure adjacent the outboard end of the headlamp 24. The pivot mechanism 30 comprises of a rod or pivot pin (not shown) passing through the headlamp 24 and supported adjacent its upper and lower ends. It will be appreciated that any other appropriate pivot design may be used.

An energy-absorbing damper 36 is disposed between a rear surface of headlamp 24 and extends rearward to the vehicle structure. The damper 36 is preferably located adjacent the inboard end of headlamp 24 and permits controlled rearward movement of the inboard end of the headlamp as the headlamp rotates about pivot mechanism 30.

The damper 36 may be pneumatic, hydraulic, mechanical, or any other appropriate type of device for absorbing or dissipating kinetic energy.

A trigger 38 connects the inboard end of headlamp 24 to grill 16, hood 14, bumper 12, or other adjacent vehicle structure. The trigger 38 holds headlamp 24 securely to the adjacent vehicle structure so that the headlamp 24 is not able to rotate about pivot mechanism 30 until a pre-determined threshold level of force is exerted on the trigger 38. When the threshold level of force is reached, the trigger 38 releases and permits the inboard end of headlamp 24 to move rearward.

The trigger 38 comprises of a first ring-like fitting 40 secured to grill 16, a second ring-like fitting 42 secured to headlamp 24 so as to be in alignment with the first fitting when the headlamp is in the normal operating condition (see FIG. 2), and a shear pin 44 passing through the two fittings. It will be appreciated that other constructions could be used to form the trigger and if required the trigger could be collocated with or integrated into the damper 36.

When a rearward force is applied to the invention headlamp assembly 20 by striking a pedestrian, the trigger 38 releases headlamp 24 and the inboard end of the headlamp is forced rearward against the resistance provided by damper 36 as the damper compresses thereby absorbing energy. See FIG. 3.

The controlled movement caused by damper 36 cushions the impact delivered to the pedestrian by headlamp 24, thereby reducing the likelihood and/or severity of injury.

The trigger 38 may be a single-use device as described above that must be replaced after it has released headlamp 24, or may be a re-settable device that functions multiple times without the need for replacement.

The generally vertical or upwardly extending orientation of pivot axis 32 and its location adjacent the outboard end of headlamp 24 yields two main advantages.

First, because the headlamp 24 is relatively wide it is able to move rearward a substantial distance and so absorb a significant amount of impact energy. For a headlamp used on an average sized passenger vehicle, a rotation of approximately 6° about pivot axis 32 corresponds to a rearward movement of approximately 45 mm adjacent the inboard end of the headlamp 24. Second, the headlamp assembly 20 is able to absorb an impact that takes place anywhere over the vertical extent of the headlamp 24. This results in the headlamp assembly 20 providing injury reduction benefits in the case of a lower leg impact as well as an upper leg impact.

For optimum absorption of impact energy, the pivot axis 32 should be oriented perpendicular to the direction of impact by a pedestrian on the headlamp 24. Depending upon the vehicle geometry and the stature of the pedestrian, the expected direction of pedestrian impact may be inclined downwardly from the horizontal. With this in mind, it has been found beneficial to move the upper end of the pivot axis 32 toward the rear of the vehicle so that the axis is tilted to the rear by an angle of from approximately 10° to approximately 30°.

Trigger 38 may also be released manually and damper 36 detached from headlamp 24 so that the headlamp 24 can be rotated forward, as shown in FIG. 4. This forward rotation allows access to the rear surface of headlamp 24 so that repairs and/or maintenance can be performed.

The headlamp 24 may be designed to break, yield, flex, crush, and/or deform under the force of a pedestrian impact in order to absorb additional impact energy.

While a preferred embodiment of the invention has been described in detail, those familiar with the art to which this invention relates will recognize that various alternative designs and embodiments for practicing the invention could be constructed without departing from the scope of the invention, as defined in the claims.

## Claims

1. A pedestrian protection headlamp assembly (20) for a motor vehicle (10) comprising a headlamp (24) having an inboard end and an outboard end mountable to the vehicle (10) to form a part of a front corner of the vehicle (10), whereby the outboard end of the headlamp (24) is connected by a fixed pivot mechanism (30) to the vehicle, and the inboard end of the headlamp is connected to the vehicle (10) by a damper (36) disposed inboard of the pivot mechanism (30), the damper (36) allowing controlled rearward movement of the inboard end of the headlamp (24) relative to the vehicle when a force applied to the headlamp (24) causes rotation of the headlamp (24) about the pivot mechanism (30) ; **characterised in that** (10) the pivot mechanism (30) permits the headlamp (24) to rotate relative to the vehicle (10) about a pivot axis (32)that is inclined rearward from the vertical at no more than 45°, such that only the inboard end of the headlamp (24) can move rearwardly relative to the vehicle.

2. A headlamp assembly as claimed in claim 1, wherein the pivot axis (32) is inclined rearward from vertical by an angle of between 10 degrees and 30 degrees.

3. A headlamp assembly as claimed in claim 1 or 2, wherein the pivot mechanism (30) is adapted to secure the headlamp (24) to a grill opening reinforcement (22).

4. A headlamp assembly as claimed in any of claims 1 to 3, wherein the damper (36) is located adjacent an inboard end of the headlamp (24).

5. A headlamp assembly as claimed in any of claims 1 to 4, further comprising a trigger (38) preventing rotation of the headlamp (24) about the pivot axis (32) when the force applied to the headlamp (24) is below a threshold value and permitting the headlamp (24) to rotate rearward when the force applied reaches or exceeds the threshold value.

6. A headlamp assembly as claimed in claim 5, wherein the trigger (38) is disposed adjacent the inboard end of the headlamp (24) and connects the headlamp (24) to the vehicle (10).

7. A headlamp assembly as claimed in claim 5 or in claim 6, wherein the trigger (38) is manually releasable and after the trigger (38) is released the pivot mechanism (30) is operable to allow the headlamp (24) to rotate forward with respect to the vehicle (10) in order to provide access to a rear surface of the headlamp (24).

8. A headlamp assembly as claimed in any of claims 1 to 7, wherein the headlamp (24) is adapted to absorb energy by deforming during an impact.

9. A motor vehicle (10) **characterised in that** the motor vehicle (10) has a pedestrian protection headlamp assembly (20) as claimed in any of claims 1 to 8.

## Patentansprüche

1. Eine Fußgängerschutz-Scheinwerfereinheit (20) für ein Kraftfahrzeug (10), bestehend aus einem Scheinwerfer (24) mit einem inneren Ende und einem äußeren Ende, die an das Fahrzeug (10) montierbar sind, um einen Teil der vorderen Ecke des Fahrzeugs (10) zu bilden, worin das äußere Ende des Scheinwerfers (24) durch einen fixen Drehmechanismus (30) mit dem Fahrzeug verbunden ist, und das innere Ende des Scheinwerfers (24) durch einen Dämpfer (36) mit dem Fahrzeug (10) verbunden ist, der innerhalb des Drehmechanismus (30) angeordnet ist, wobei der Dämpfer (36) eine kontrollierte Rückwärtsbewegung des inneren Endes des Scheinwerfers (24) relativ zum Fahrzeug erlaubt, wenn eine auf den Scheinwerfer (24) einwirkende Kraft eine Drehung des Scheinwerfers (24) um den Drehmechanismus (30) verursacht, **dadurch gekennzeichnet, dass** der Drehmechanismus (30) dem Scheinwerfer (24) erlaubt, sich relativ zum Fahrzeug (10) um eine Drehachse (32) zu drehen, die von der Vertikale um höchstens 45° nach hinten geneigt ist, sodass nur das innere Ende des Scheinwerfers (24) sich relativ zum Fahrzeug nach hinten bewegen kann.

2. Eine Scheinwerfereinheit, wie in Anspruch 1 beansprucht, worin die Drehachse (32) von der Vertikalen in einem Winkel zwischen 10 und 30 Grad nach hinten geneigt ist.

3. Eine Scheinwerfereinheit, wie in Anspruch 1 oder 2 beansprucht, worin der Drehmechanismus (30) entsprechend adaptiert ist, um den Scheinwerfer (24) an einer Verstärkung der Grillöffnung (22) zu fixieren.

4. Eine Scheinwerfereinheit, wie in Anspruch 1 bis 3 beansprucht, worin der Dämpfer (36) an ein inneres Ende des Scheinwerfers (24) angrenzt.

5. Eine Scheinwerfereinheit, wie in einem der Ansprüche 1 bis 4 beansprucht, die überdies einen Auslöser (38) umfasst, der die Rotation des Scheinwerfers (24) um die Drehachse (32) verhindert, wenn die auf den Scheinwerfer (24) einwirkende Kraft unter einem Grenzwert liegt, und es dem Scheinwerfer (24) erlaubt, sich nach hinten zu drehen, wenn die einwirkende Kraft den Grenzwert erreicht oder überschreitet.

6. Eine Scheinwerfereinheit, wie in Anspruch 5 beansprucht, worin der Auslöser (38) an das innere Ende des Scheinwerfers (24) angrenzt und den Scheinwerfer (24) mit dem Fahrzeug (10) verbindet.

7. Eine Scheinwerfereinheit, wie in Anspruch 5 oder in Anspruch 6 beansprucht, worin der Auslöser (38) manuell gelöst werden kann und der Drehmechanismus (30) betriebsfähig ist, nachdem der Auslöser (38) gelöst wurde, damit der Scheinwerfer (24) sich im Hinblick auf das Fahrzeug (10) nach vorne drehen kann, um Zugriff auf eine hintere Oberfläche des Scheinwerfers (24) zu ermöglichen.

8. Eine Scheinwerfereinheit, wie in einem der Ansprüche 1 bis 7 beansprucht, worin der Scheinwerfer (24) entsprechend adaptiert wurde, um Energie zu absorbieren, indem er sich während eines Aufpralls verformt.

9. Ein Fahrzeug (10), das **dadurch gekennzeichnet ist, dass** das Fahrzeug (10) eine Fußgängerschutz-Scheinwerfereinheit (20) aufweist, wie in einem der Ansprüche 1 bis 8 beansprucht wurde.

## Revendications

1. Un bloc phare de protection du piéton (20) pour un véhicule à moteur (10) comprenant un phare (24) possédant une extrémité intérieure et une extrémité extérieure montable sur le véhicule (10) de façon à former une partie d'un angle avant du véhicule (10), grâce à quoi l'extrémité extérieure du phare (24) est raccordée par un mécanisme de pivot fixe (30) au véhicule (10), et l'extrémité intérieure du phare est raccordée au véhicule (10) par un amortisseur (36) disposé à l'intérieur du mécanisme de pivot (30), l'amortisseur (36) permettant un déplacement vers l'arrière contrôlé de l'extrémité intérieure du phare (24) par rapport au véhicule lorsqu'une force appliquée au phare (24) entraîne une rotation du phare (24) autour du mécanisme de pivot (30), **caractérisé en ce que** le mécanisme de pivot (30) permet au phare (24) de pivoter par rapport au véhicule (10) autour d'un axe de pivot (32) qui est incliné vers l'arrière à partir de la verticale à pas plus de 45°, de sorte que seule l'extrémité intérieure du phare (24) puisse se déplacer vers l'arrière par rapport au véhicule.

2. Un bloc phare selon la Revendication 1, où l'axe de pivot (32) est incliné vers l'arrière à partir de la verticale d'un angle situé entre 10 degrés et 30 degrés.

3. Un bloc phare selon la Revendication 1 ou 2, où le mécanisme de pivot (30) est adapté de façon à fixer le phare (24) à un renfort d'ouverture de calandre (22).

4. Un bloc phare selon l'une quelconque des Revendications 1 à 3, où l'amortisseur (36) est placé de manière adjacente à une extrémité intérieure du phare (24).

5. Un bloc phare selon l'une quelconque des Revendications 1 à 4, comprenant en outre un déclencheur (38) empêchant la rotation du phare (24) autour de l'axe de pivot (32) lorsque la force appliquée au phare (24) se situe en dessous d'une valeur seuil et permettant au phare (24) de pivoter vers l'arrière lorsque la force appliquée atteint ou dépasse la valeur seuil.

6. Un bloc phare selon la Revendication 5, où le déclencheur (38) est disposé de manière adjacente à l'extrémité intérieure du phare (24) et raccorde le phare (24) au véhicule (10).

7. Un bloc phare selon la Revendication 5 ou 6, où le déclencheur (38) est libérable manuellement et, une fois que le déclencheur (38) est libéré, le mécanisme de pivot (30) est actionnable de façon à permettre au phare (24) de pivoter vers l'avant par rapport au véhicule (10) afin de fournir un accès à une surface arrière du phare (24).

8. Un bloc phare selon l'une quelconque des Revendications 1 à 7, où le phare (24) est adapté de façon à absorber de l'énergie en se déformant au cours d'un impact.

9. Un véhicule à moteur (10) **caractérisé en ce que** le véhicule à moteur (10) possède un bloc phare de protection du piéton (20) selon l'une quelconque des Revendications 1 à 8.
